# EUROPÄISCHE PATENTANMELDUNG

(11) **EP 0 708 287 A1**
(43) Veröffentlichungstag der Anmeldung: **24.04.1996**
(21) Anmeldenummer: 95116412.8
(22) Anmeldetag: 18.10.1995
(51) Int. Cl.: F16L 9/19, H02G 9/06

(54) **Rohrverband**

(30) Priorität: 21.10.1994 DE 4437713
(71) Anmelder: THYSSEN POLYMER GMBH, D-81671 München (DE)
(72) Erfinder: Bauer, Peter, D-94357 Konzell (DE); Helf, Walter, D-94315 Straubing (DE); Lederer, Roland, D-93049 Regensburg (DE)

(57) **Zusammenfassung**

Die Erfindung bezieht sich auf einen aus mehreren Kabelführungsrohren (1,2,3,4) unterschiedlichen Durchmessers bestehenden Rohrverband, mit die einzelnen Rohre verbindenden Stegen, bei dem diese Verbindungsstege (5,6,7) an unterschiedlichen Orten des äußeren Umfanges eines jeden Rohres unter einem Winkel α an Rohren kleineren Durchmessers und einen Winkel β an Rohren größeren Durchmessers angeformt sind, wobei die Verbindungsstege (5,6,7) unterschiedliche Breite aufweisen und der Rohrverband gefaltet in einen Kabelkanal (8) einführbar, flach auslegbar oder um Radien verlegbar ist.

## Beschreibung

Die Erfindung bezieht sich auf einen zum Einzug in ein Kabelkanal geeigneten, aus mehreren Kabelführungsrohren unterschiedlichen Durchmessers bestehenden Rohrverband mit Verbindungsstegen, ein sogen. Einführungsbündel, mit Verbindungsstegen, die die einzelnen Rohre miteinander flexibel verbinden.

Zum Einzug in Kabelkanäle, beispielsweise Kabelkanalrohre geeignete Rohrverbände sind an sich bekannt. So geht beispielsweise aus der DE-PS 32 17 401 ein solcher als Kabelführungsaggregat bezeichneter Rohrverband hervor, bei dem ein zentrales Kabelfuhrungsrohr größeren Durchmessers mit beidseits angeschlossenen weiteren Kabelführungsrohren mit reduziertem Durchmesser vorgesehen ist, die in bekannter Weise gemeinsam mit ihren Abstandsstegen stranggepreßt sind, wobei die Abstandsstege im Bereich der Mitte der Kabelführungsrohre mit sich diametral gegenüberliegenden Anschlußpunkten angeschlossen sind.

Ein ähnlicher Rohrverband ist der DE-PS 33 30 449 zu entnehmen, wobei die einzelnen Kabelführungsrohre größeren Durchmessers um den Umfang eines zentralen Kabelführungsrohres kleineren Durchmessers äquidistant verteilt angeordnet sind.

Diese Kabelführungsaggregate haben sich in der Praxis, da einerseits zu aufwendig und andererseits wegen umständlicher Handhabung, dem Vorhandensein eines zentralen Rohres und nicht zuletzt dadurch bedingter übermäßiger Reibung an der Innenwandung des Kabalkanals beim Einführen in denselben, nicht durchgesetzt.

Weitere gattungsgemäße Kabelführungsaggregate gehen unter anderem aus der DE-OS 42 05 924 hervor, wobei der Rohrverband eine zwangsweise vorgegebene Orientierung, d.h. Faltrichtung, durch die Anordnung der Verbindungsstege zwischen den einzelnen Rohren unter jeweils vorgegebenen Winkeln erhält.

Schließlich finden sich Rohrverbände mit angeformten Verbindungsstegen zwischen den Rohren für den Transport von Fluiden, der Kabelführung usw. außerdem noch in der FR-PS 773 584 mit starren Verbindungsstegen; der DE-PS 38 06 663 mit Stützelementen, die im Rohrbündel zusammenliegen, das durch Verschlußelemente in seiner Faltform gehalten wird; dem DE-GM 19 68 384, welches die diametrale Anordnung der Verbindungsstege zwischen den Rohren des Rohrverbandes aufzeigt, wobei deren Breite dem Durchmesser der Rohre entspricht und in dem Prospektblatt "Mehrfachrohrsystem Vogelsang M4" Ausgabe 05/85 der Firma Dipl. Ing. Dr. E. Vogelsang GmbH & Co KG, Herten, der aus jeweils vier Rohren abwechselnd größeren und kleineren Durchmessers besteht. Ein solcher Rohrverband kann entweder flach ausgelegt oder, in beliebige Richtung gefaltet, in einen Kabelkanal eingeführt, Anwendung finden.

Der Erfindung, wie sie in den Ansprüchen beschrieben ist, liegt die Aufgabe zugrunde, einen solchen eingangs beschriebenen Rohrverband aus Kabelführungsrohren zu verbessern, wobei dieser auch eine vorzugsweise Faltrichtung besitzen kann, wirtschaftlich herstellbar und auf Baustellen, trotz eventueller Fertigungstoleranzen, einfach handzuhaben ist.

Die mit der Erfindung erzielten Vorteile liegen auf der Hand. Die Handhabung auf der Baustelle ist einfach, eine vorzugsweise Faltrichtung z.B. ist mit der Anordnung der Verbindungsstege zwischen den Rohren und deren unterschiedlichen Neigungswinkeln vorgebbar, wobei die einzelnen Rohre des Rohrverbandes in einer Ebene liegen, evtl. Fertigungstoleranzen werden ausgeglichen. Schließlich kann durch unterschiedliche Dicke der Verbindungsstege dem Rohrverband auch eine bestimmte Stabilität in einer vorbestimmbaren Richtung gegeben werden.

Die Erfindung ist nachstehend anhand eines in den Abbildungen dargestellten Ausführungsbeispieles näher erläutert.

Es zeigt:
Fig. 1 einen Rohrverband gem. der Erfindung,
Fig. 2 einen Schnitt durch einen belegten Kabelkanal,
Fig. 3 eine Ausführungsvariante der Fig. 2.

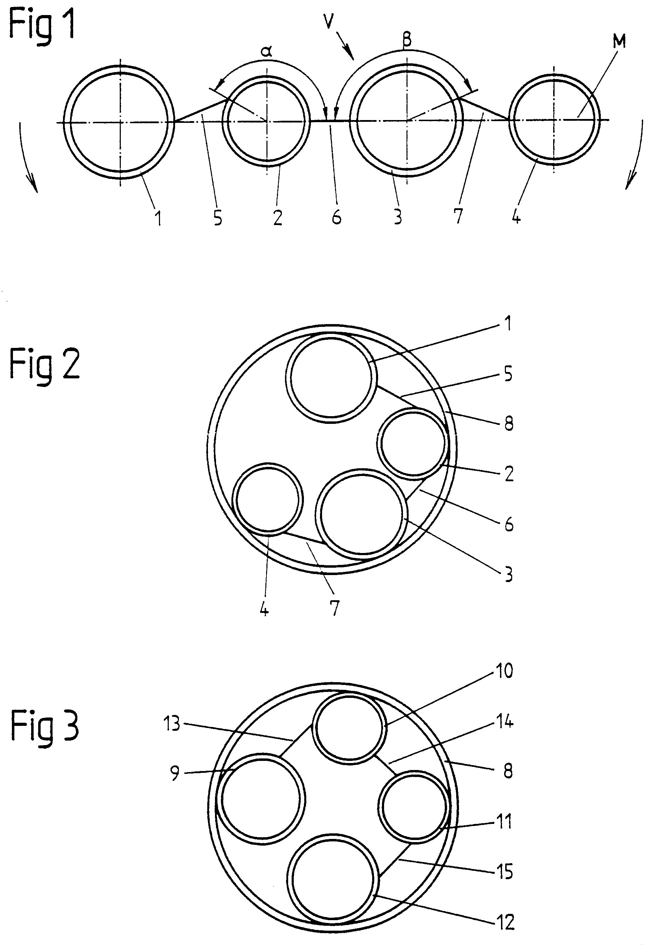

Der in Figur 1 dargestellte Rohrverband V besteht aus den als Kabelführungsaggregat geeigneten Rohren 1,2,3, und 4, von denen die Rohre 1 und 3 einen größeren Durchmesser als die Rohre 2 und 4 besitzen. Zwischen den einzelnen Rohren des Rohrverbandes sind bekannte Verbindungsstege vorgesehen, die erfindungsgemäß von den endständigen Rohren 1 bzw. 4 von dem Schnittpunkt der Ebene der Mittellinie (M) mit den Rohrwandungen schräg nach oben zu den benachbarten inneren Rohren 2,3 des Rohrverbandes V verlaufen. Hierdurch ergibt sich ein Neigungswinkel α zwischen dem die inneren Rohre 2 und 3 koppelnden Verbindungssteg 6 und dem Rohr kleineren Durchmessers sowie ein entsprechend größerer Winkel β zwischen diesem Verbindungssteg und dem Rohr größeren Durchmessers. Der Schnittpunkt der beiden Verbindungsstege 5,7 liegt oberhalb des Verbindungssteges 6, also etwa im Bereich der Mitte des Rohrverbandes V.

Der Verbindungssteg 6 zwischen den inneren Rohren 2,3 des Rohrverbandes V ist in der Mittelebene M desselben angeordnet. Die Breite der Verbindungsstege 5,6,7 ist dabei unterschiedlich, um den jeweiligen Anforderungen an den Kabelkanal auf einfache Weise Rechnung tragen zu können. Durch Einstellung der Shorehärte oder der Dicke der Verbindungsstege kann überdies auch die Rückstellkraft und Stabilität des Rohrverbandes in einer vorgegebenen Richtung beeinflußt werden.

In Figur 2 ist der Rohrverband V in Richtung der Pfeile ↓↓ gefaltet und so in den Kabelkanal 8 eingeführt, wobei sich die einzelnen Rohre desselben durch ihre Steifigkeit an die innere Wand des Kabelkanales anlegen. Eine Ausführungsvariante der Figur 2 ist der Figur 3 zu entnehmen. Dabei sind die Rohre 9 und 12 größeren Durchmessers endständig und die beiden Rohre 10 und 11 als innere Rohre des Rohrverbandes V vorgesehen und in den Kabelkanal 8 eingeführt. Die Verbindungsstege sind mit 13,14,15 bezeichnet, wobei der Verbindungssteg 14, zwischen den beiden Rohren 10 und 11, in der Ebene der Mittellinie M angeordnet ist.

Die Erfindung ist selbstverständllich nicht auf das dargestellte Ausführungsbeispiel mit vier Kabelführungsrohren in der gezeigten Anordnung beschränkt. Es können auch größere Rohrverbände vorgesehen werden, die, beispielsweise, durch Anordnung der Verbindungsstege in unterschiedlichen Richtungen und unter verschiedenen Winkeln mit unterschiedlichen Breiten an den einzelnen Rohren beispielsweise in verschiedene, vorbestimmbare Richtungen faltbar sind. Anstelle von glatten Rohren kann der Rohrverband V auch, aus in den Abbildungen nicht dargestellten, Wellrohren bestehen. Der vorgeschlagene Rohrverband kann z.B. flach ausgelegt, um Radien geführt oder in Kabelkanäle eingeführt werden. Die Kombination von schräg und horizontal angeordneten Verbindungsstegen erlaubt auch, selbstverständlich im fertigungstechnisch vertretbaren Rahmen, selbst größere Rohrverbände, beispielsweise als Cluster, zu erzeugen und diese in praktisch jeder gewünschten Form zu verlegen, was u.a. bei größeren Kabelführungssträngen, wie auf Großbaustellen notwendig, von Vorteil ist. Als geeigneter Werkstoff für den Rohrverband hat sich Kunststoff, insbesondere PVC und PE erwiesen.

### STÜCKLISTE

- 1,3,9,12: Kabelführungsrohre größeren Durchmessers
- 2,4,10,11: Kabelführungsrohre kleineren Durchmessers
- 5,7,13,15: Verbindungsstege schräg
- 6,14: Verbindungsstege eben
- 8: Kabelkanal

## Patentansprüche

1. Zum Einzug in einen Kabelkanal geeigneter, aus mehreren Kabelführungsrohren unterschiedlichen Durchmessers bestehender Rohrverband mit mindestens einem Verbindungssteg an jedem Rohr zur flexiblen Verbindung der einzelnen Rohre miteinander, **gekennzeichnet durch** Verbindungsstege (5,6,7) die an unterschiedlichen Orten des äußeren Umfanges eines jeden Rohres (1,2,3,4) des Rohrverbandes (V) unter einem Winkel α an den Rohren (2,4) kleineren Durchmessers und einen Winkel β an den Rohren (1) größeren Durchmessers angeformt sind, wobei die Verbindungsstege (5,6) unterschiedliche Breite aufweisen.

2. Rohrverband nach Anspruch 1, **dadurch gekennzeichnet,** daß die Verbindungsstege (5,7) an den endständigen Rohren (1,4) des Rohrverbandes (V) von deren äußeren Umfang im Bereich der Mittellinie (M) ausgehend schräg in Richtung auf einen gemeinsamen Schnittpunkt hin verlaufend unter den Winkeln α bzw. β oberhalb der Mittellinie (M) an den inneren Rohren (2,3) angeformt sind, während der Verbindungssteg (6) zwischen den inneren Rohren (2,3) in der Ebene der Mittellinie (M) angeordnet ist.

3. Rohrverband nach Anspruch 1 und 2, **dadurch gekennzeichnet,** daß die Verbindungsstege (5,6,7) unterschiedliche Dicke aufweisen.
